# EUROPEAN PATENT APPLICATION

(11) **EP 4 156 063 A1**
(43) Date of publication of application: **29.03.2023**
(21) Application number: 21198263.2
(22) Date of filing: 22.09.2021
(51) Int. Cl.: G06Q 30/02

(54) **OFFLINE PROVISION OF INFORMATION ABOUT ITEMS OF CLOTHING AND/OR ACCESSORIES WORN BY A USER**

(71) Applicant: Deutsche Telekom AG, 53113 Bonn (DE)
(72) Inventor: Minow, Jascha, 64625 Bensheim (DE); El Mallouki, Said, 56329 St. Goar (DE); Jahn, Carl, 65191 Wiesbaden (DE); Platschek, Martin Michael, 12557 Berlin (DE)
(74) Representative: Braun-Dullaeus Pannen Emmerling Patent- & Rechtsanwaltspartnerschaft mbB

(57) **Abstract**

Techniques for offline provision of product information, in particular clothing and/or accessories, associated with a user to other users, comprising the following steps:
• Providing an image, the image showing, at least in part, an image of at least one product associated with the user, in particular the user carrying the product;
• Transferring the image to a neural network "CNN" trained for image and object recognition, wherein the neural network analyzes the image and recognizes at least the one product;
• Retrieving at least one piece of product information from the recognized product by means of a comparison of the known product with a database;
• Entering the product information into a first data field of a broadcast signal;
• Sending the broadcast signal by means of a terminal device that the user carries with him.

## Description

The invention relates to techniques enabling offline provision of product information, in particular clothing and/or accessories worn by a user.

The internet offers virtually unlimited possibilities to research topics and products and to advertise and even sell them online. Countless platforms have established themselves for this purpose, such as eBay, Amazon, Zalando, YouTube, Facebook and Instagram, to name just the most popular. On all platforms, products are at least advertised and increasingly also sold directly.

However, the promotion and distribution of products is disadvantageously always linked to these platforms, which are only available "online", or to celebrities who promote these products, such as actors, athletes or, more recently, influencers. As a non-prominent person, it is not easily possible to "actively" promote products without these platforms and possibly earn money from them. Furthermore, users can usually only get to know products as interested parties via these platforms.

However, the following situation happens very often: People walk in the city, for example, and thereby see products in everyday life, especially clothing and/or accessories and/or technical devices, which they like and which they would possibly also like to buy or about which they would like to learn more. One possible approach is to approach people directly and ask them about the products. However, many obstacles can make this more difficult. Some people do not like to be approached, the other person speaks a different language or cannot remember the name of the product. In addition, there is an inhibition threshold to address complete strangers directly in this regard. As a result, both the manufacturers of products and the carriers of these products lose potential sales.

Accordingly, it is the task of the invention to provide technical means which enable a user to make products assigned to him known to other users in a simple manner, in particular digitally.

This object is solved by the features of the independent claims.

The features of the various aspects of the invention described below or the various examples of implementation may be combined with each other, unless this is explicitly excluded or is technically impossible.

According to a first aspect of the invention, a method for offline provision of product information, in particular of clothing and/or accessories, is given, wherein the product information associated with a user is provided to other users, also called recipients, comprising the following steps:
- Providing an image, the image showing, at least in part, an image of at least one product associated with the user;
   ∘ in particular, the user also carries the product, in particular, the user wears the product. For example, the image may show an item of clothing worn by the user. Alternatively, the user may take a picture of a product that he intends to wear soon, for example when he leaves the house.
   ∘ the image may, for example, be provided to a terminal device of the user. In principle, it is possible that the image is sent to the user's terminal device and/or is created by the terminal device itself, in particular if the terminal device is a smartphone. In particular, an app programmed for the method of offline provision of product information may be used for this purpose. Alternatively or additionally, the image can also be provided to a server of a service provider.
- Passing the image to a neural network "CNN" trained for image and object recognition, in particular a machine learning method deep learning CNN, wherein the neural network analyzes the image and recognizes at least the one product;
   ∘ The recognition is therefore, in a sense, an assignment of the product in the image to known products. For example, the recognition results in the fact that it is a 501 jeans from Levis, a certain T-shirt from Versace, Adidas shoes or a certain pair of RayBan glasses.
   ∘ For this purpose, the neural network can in principle be implemented on the server and/or on the user's terminal device. A neural network implemented on the server has greater computing resources, in which case the image can be transmitted from the terminal device to the server via a communication channel. A neural network implemented on the server can also be updated more efficiently on a regular basis, so that its image and object recognition can reliably associate new products. In particular, it is possible for the service provider to train the neural network on a regular basis.
- Retrieving at least one piece of product information from the recognized product. in particular by means of a comparison of the known product with a database;
   ∘ this database may, for example, be stored in the terminal device and/or on the server. Since a database of a large number of possible products may be of considerable size and should be updated regularly, it is advantageous to store this database on the server. The product information is a unique product ID that identifies the product and distinguishes it from other products. In particular, the database may be in the form of a table with the recognized product listed in one column and the product ID listed in the other column;
- Entering the product information into a first data field of a broadcast signal;
   ∘ this step can be executed on the terminal device and/or on the server. If this step is executed on the terminal device, the server transmits the product information to the terminal device via the communication channel in advance.
- Sending the broadcast signal by means of a terminal device that the user carries with him.

This offers the advantage that the aforementioned disadvantages from the prior art are overcome and other users get digital access to the user's product information by means of the broadcast signal. With a corresponding receiving unit, in particular with a smartphone, other users can therefore receive the broadcast signal. The receiving unit can then digitally process the product information accordingly, so that it is apparent to the other user which product or products were depicted in the photo. For example, the photograph may show a bag from a particular manufacturer. This bag is recognized by the steps of the method and unique information about the bag is sent by the broadcast signal. For example, if another user receives this broadcast signal, she thus obtains the information about which bag it is without having to actively address the wearer. In particular, the broadcast signal can be forwarded from a smartphone of the wearer directly to an app of the smartphone of the recipient that decodes and displays the product information in a readable manner for the recipient. Preferably, this is the aforementioned app for offline provision of product information, which is also implemented on the smartphone of the wearer of the product.

If a fellow human being likes an item of clothing or accessory, he or she can use the broadcast signal emitted by the wearer to find out which product it is, preferably with the help of the app. The product can be easily ordered via a direct link to the manufacturer or sales page. The wearer of the product can be billed directly for a RevShare when an order is placed, since his "beacon" can send out a personalized affiliate link that clearly identifies him as the advertiser who triggered the purchase.

Preferably, the terminal device is a smartphone of the user. In the following, the invention is also mostly described specifically using the example of a smartphone, whereby the smartphone is to be understood throughout only as a preferred embodiment of the terminal device.

In a preferred embodiment, an app is implemented on the terminal device that technically implements the steps to be performed by the terminal device for the offline provision of product information. This has the advantage that such an app can be programmed and provided by a service provider, for example, and thus the steps of the method can be implemented efficiently in a closed environment.

More suitably, the broadcast signal is in the form of a radio signal, in particular a mobile network proximity service and/or a device-to-device communication and/or a Bluetooth iBeacon.

These types of radio signals show the advantage that they are suitable in particular for smartphones for mutual transmission and reception of signals and additionally spatially limit the reception also locally in such a way that the radio signal can only be received by such other users/receivers who are located with their receiving units in the vicinity of the wearer of the products. On the one hand, such a somewhat limited transmission power conserves resources and, on the other hand, only radio signals in a certain spatial proximity are really interesting and relevant, since only then possible interested parties can see the products, i.e. in particular the worn clothing, of the user and find them interesting.

In one possible embodiment, the terminal device broadcasts the broadcast signal at regular intervals and/or when it detects other terminal devices in its vicinity. In particular, smartphones can detect each other in the vicinity when they each transmit Bluetooth signals.

This offers the advantage that the energy of the smartphone is used efficiently for sending the broadcast signals. In particular, the other user who wants to have product information and who is in the vicinity of the wearer can start his app and specifically search for whether the wearer transmits corresponding broadcast signals.

Preferably, a matching score may be determined during the analysis, and the product is considered to be detected only if the matching score exceeds a predefined threshold.

This offers the advantage of a filter function, so that products are only classified as detected if this is considered safe to a predetermined probability. This prevents the sending of product information that does not match the product the wearer is carrying.

Preferably, an alternative product is suggested to the user, in particular according to a best matching algorithm, if the matching score falls below the predefined threshold.

This offers the advantage that the carrier can at least send product information about a similar product to the one shown in the picture.

Preferably, the database is linked to a personal profile of the user, in particular his shopping cart related to a service provider.

This offers the advantage that the products can be more easily recognized and assigned, since the shopping cart information shows which products the user has purchased in the past.

Preferably, the product information is arranged to identify the product. For example, the product information, in particular a unique product ID, can have as product information the name of the product and the manufacturer. The product information may also alternatively or additionally be configured as a link to the product, in particular as a link to the product in the online shop of the service provider.

This offers the advantage that the recipient is provided with the option to order the product if he/she wishes to buy it without any further action.

The image may be provided by means of a selfie, in particular via the app, taken by the user by means of his terminal device, in particular his smartphone.

This offers the advantage that the user can easily capture the products he is currently wearing in order to send them via his smartphone using the broadcast signal.

Preferably, the image depicts, at least in sections, a plurality of products associated with the user, in particular worn by the user.

This offers the advantage that several products can be recognized and assigned with a single analysis. Thus, in particular, multiple items of clothing and/or accessories of the user can be detected at once and sent via his smartphone by means of the broadcast signal. The plurality of products in the broadcast signal can be represented as a wear list with the respective corresponding product information.

In one embodiment, a user ID may be entered into a second data field of the broadcast signal. The user ID can be entered in the second data field, for example, by means of the server and/or the terminal device. The user ID is in particular unique and may be generated, for example, before the service provider and/or generated, for example, from an eSIM ID of the user terminal. It is also possible that the user ID is generated by means of the app.

The uniqueness of the user ID advantageously ensures that it is known which user transmits information about the products you carry through the broadcast signal. Based on this, the user can, for example, be credited or paid out monetary amounts by the service provider and/or an online shop.

An optional third data field of the broadcast signal may have an app ID.

This offers the advantage that a corresponding app started on the user's terminal device, in particular an app with the same app ID, can recognize that the broadcast signal sent out is intended for the corresponding app. This enables the app to start processing the broadcast signal in a targeted manner. Such targeted processing conserves the resources of the end devices. In a sense, the app recognizes "here comes a signal for me".

Expediently, the lifetime of a particular broadcast signal is limited. In particular, the lifetime of a broadcast signal is no longer than 24 hours, and particularly preferably the lifetime of a broadcast signal ends at the end of a day. It is also possible that the user's terminal device detects when the user goes to sleep and deletes the broadcast signal thereupon.

This offers the advantage that the broadcast signal no longer sends product information that does not correspond to the products, in particular the clothing and/or accessories, that the user is wearing. In the case of clothing, this is immediately obvious because people typically change their clothes every day.

Preferably, a first broadcast signal is overwritten by a second broadcast signal when a new image is provided.

As above, this feature also offers the advantage that the broadcast signal no longer sends product information that does not correspond to the products, in particular the clothing and/or accessories, that the user is wearing. Providing a new image, for example in the app, is a clear signal that the products the user is wearing have changed. In particular, the image is a selfie.

According to a second aspect of the invention, a user terminal is disclosed, in particular a smartphone, wherein the user terminal is adapted to perform the steps of the method described above.

For this purpose, the user terminal can in particular have a communication channel for data communication with a server of a service provider. In addition, the user terminal expediently has corresponding hardware to generate a broadcast signal. For example, this may be implemented by a processor of the user terminal and a corresponding algorithm. It is possible to implement this algorithm in the app described above. In addition, the user terminal suitably comprises corresponding transmission module to send the broadcast signal.

According to a third aspect of the invention, the use of a user terminal, in particular a smartphone, for offline provision of product information, in particular clothing and/or accessories, wherein the product information is associated with a user, is disclosed.

In the following, preferred implementation examples of the present invention are explained with reference to the accompanying figure:

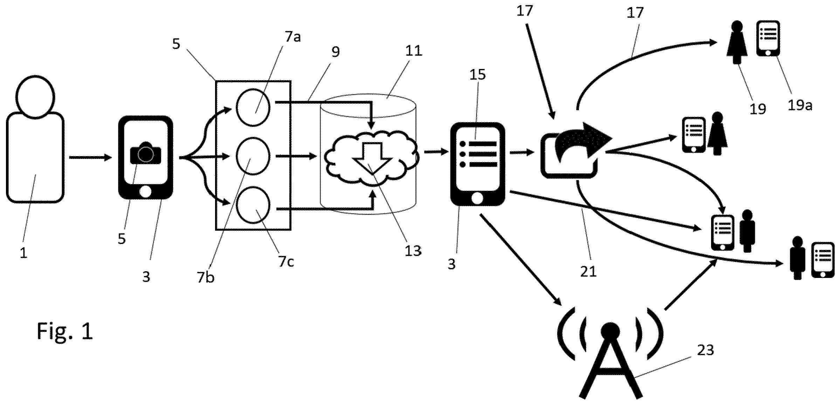

- Fig. 1:: Schematically shows techniques and a flow for providing product information of a user to other users offline.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Fig. 1 shows a possible embodiment example for offline provision of product information of a user to other users.

A user 1 takes a photo 5 of himself (selfie) or a product 7, or multiple products 7a, b, c, that the user 1 is or will be wearing, using his smartphone 3 or tablet 3.

This photo is transmitted via a first communication link 9 to a trained neural network implemented on a server 11, more specifically Convolutional Neural Network (CNN), and analyzed by the neural network.

The neural network recognizes and identifies the products/clothing items 7a, b, c located on the image 5. Subsequently, the identified products/clothing items 7a, b, c can be matched with shopping lists 15 of the user from his linked online stores such as Amazon, Zalando or eBay.

If a product 7a, b, c is only matched with a low probability or not matched at all, alternatives are compiled according to a "best-matching algorithm" from a list of products/garments and the user's personal preferences (personality, purchase history, brands, but also places for companies to rent) by a calculated "similarity score".

This can mean the following result, for example: User 1 wears blue shoes of the brand adidas, an olive green jacket from Nike, as well as black RayBan sunglasses and an "unmatched" cap. Next, a matching of the products identified in the image with the shopping history of user 1 at his linked online services, such as Amazon or Zalando, is performed in order to perform an exact product identification including the ordered size. This results in the following result for the adidas shoes, for example: adidas Runfalcon Street, blue, size 43.

For products 7 not found in the purchase history, similar products are assigned based on the "similarity score", such as olive green jacket or Rayban sunglasses black or a Kangaroo hat, because the user has rented this space to the company Kangaroo.

The identified and completed products 7 are stored as a carrying list 15.

The carrying list 15 is broadcasted by the smartphone 3 of the user 1 as a broadcast signal 17, in particular by iBeacon technology 17 (very short range) to receivers 19, respectively to their terminals 19a and/or as well as by means of proximity services 21 and device-to-device communication in 4G/5G 23 networks, in which the carrier only assumes the role of an intermediary and the exchange of the carrying list 15 takes place between the participating terminals 5, 19a. As soon as another person on the street sees the user 1, is up to 10 m away or is in the same mobile phone cell, the smartphone 19a of the receiver 19 on the street is able to receive the carrying list 15 emitted by the smartphone 1 as a broadcast signal 17 and to see the products that are on the carrying list 15 and possibly to order them directly via an app installed on their smartphone 19a.

In an alternative solution of the invention, the user 1 can also manually fill the carrying list 15 with the products that he is carrying and thus dispense with image recognition. The manually filled carrying list is then transmitted accordingly via iBeacon or 4G/5G D2D.

A second embodiment example is explained below, the features of which can be combined with those of the embodiment example of Fig. 1 as desired, provided that this is not technically impossible.

Automatic detection of matching products sent by other users:
User 1 on a bus and broadcasts his "carry list 15 of products he is carrying for others using iBeacon technology as a broadcast signal 17.

The receiver 19 is on the same bus and also sends his wear list 15. In this case, the "receiver" 19 is considered to be at the same time a "wearer" 1, analogous to the user 1. However, the receiver 19 does not look at his smartphone and therefore does not recognize that the user 1 is wearing a jacket that he would very likely also like to buy.

A "style match maker" cloud service that is set up to create wear lists 15 also maintains preferences for all users who use the system and have submitted at least one wear list 15, which allows the "style match maker" cloud service to recognize the user's preferences.

The "style match maker" cloud service detects that the product preferences of the receiver 19 match those of user 1 by calculating a "style matching score" and that the respective smartphones 5, 19a are in close proximity to each other.

Depending on the threshold of the "style match score" (e.g., > 90%), the "style match maker" service notifies the recipient 19 of this event (i.e., the high "style match score") by the service sending a push notification to the smartphone 19a of the recipient 19, which allows the recipient 19 to directly access the wear list 15 sent by the user 1 via device-to-device communication, which displays the exact product that user 1 is wearing and that recipient 19 is most likely to like.

If the "Style Match Score" is below a threshold set by Recipient 19 (e.g. <90%), the found items are placed on a list for later review by Recipient 19.

The list can serve as training data for Reinforced Learning depending on the user's response as they later scroll through the list and either discard or order items to optimize the machine learning algorithm that drives the "Style Match Maker".

## Claims

1. Method for offline provision of product information, in particular clothing and/or accessories, associated with a user to other users, comprising the following steps:
• Providing an image (5), the image showing, at least in part, an image of at least one product (7) associated with the user (1), in particular the user (1) carrying the product (7);
• Transferring the image to a neural network "CNN" (13) trained for image and object recognition, wherein the neural network analyzes the image (5) and recognizes at least the one product (7);
• Retrieving at least one piece of product information from the recognized product (7), in particular by means of a comparison of the known product with a database;
• Entering the product information into a first data field of a broadcast signal (17);
• Sending the broadcast signal (17) by means of a terminal device (3) that the user carries with him.

2. The method according to claim 1, **characterized in that** an app is implemented on the terminal device which technically implements the steps to be performed by the terminal device for the offline provision of product information.

3. The method according to any one of the preceding claims, **characterized in that** the broadcast signal is a radio signal, in particular a mobile network proximity service and/or a device-to-device communication and/or a Bluetooth iBeacon.

4. The method according to any one of the preceding claims, **characterized in that** the terminal transmits the broadcast signal at regular intervals and/or when it detects other terminals in its vicinity.

5. The method according to any one of the preceding claims, **characterized in that** a matching score is determined during the analysis, wherein the product is considered to be detected only if the matching score exceeds a predefined threshold.

6. The method according to claim 5, **characterized in that** an alternative product is suggested to the user, in particular according to a best matching algorithm, if the matching score falls below the predefined threshold.

7. The method according to one of the preceding claims, **characterized in that** the database is linked to a personal profile of the user, in particular his shopping cart.

8. The method according to any one of the preceding claims, **characterized in that** the product information is arranged to identify the product.

9. The method according to any one of the preceding claims, **characterized in that** the image is provided by means of a selfie, in particular via the app, taken by the user by means of his terminal device, in particular his smartphone.

10. The method according to any one of the preceding claims, **characterized in that** the image shows, at least in sections, a plurality of products associated with the user, in particular worn by the user.

11. The method according to any one of the preceding claims, **characterized by** entering a user ID into a second data field of the broadcast signal.

12. The method according to any one of the preceding claims, **characterized in that** the broadcast signal comprises a third data field comprising an app ID.

13. The method according to any one of the preceding claims, **characterized in that** the lifetime of a particular broadcast signal is limited.

14. The method according to any one of the preceding claims, **characterized in that** a first broadcast signal is overwritten by a second broadcast signal when providing a new image.

15. A user terminal, in particular a smartphone, configured to perform the steps of the method according to any one of claims 1 to 14.

## Amended claims

### Amended claims in accordance with Rule 137(2) EPC.

1. Method for offline provision of product information, in particular clothing and/or accessories, associated with a user to other users, comprising the following steps:
• Providing an image (5), the image showing, at least in part, an image of at least one product (7) associated with the user (1), in particular the user (1) carrying the product (7), to a terminal device of the user and/or to a server of a service provider;
• Transferring the image to a neural network "CNN" (13) trained for image and object recognition, wherein the neural network analyzes the image (5) and recognizes at least the one product (7), wherein the neural network is implemented on the server and/or an the terminal of the user;
• Retrieving at least one piece of product information from the recognized product (7) by means of a comparison of the known product with a database;
• Entering the product information into a first data field of a broadcast signal (17);
• Sending the broadcast signal (17) by means of the terminal device (3) that the user carries with him.

2. The method according to claim 1, **characterized in that** an app is implemented on the terminal device which technically implements the steps to be performed by the terminal device for the offline provision of product information.

3. The method according to any one of the preceding claims,
**characterized in that** the broadcast signal is a radio signal, in particular a mobile network proximity service and/or a device-to-device communication and/or a Bluetooth iBeacon.

4. The method according to any one of the preceding claims,
**characterized in that** the terminal transmits the broadcast signal at regular intervals and/or when it detects other terminals in its vicinity.

5. The method according to any one of the preceding claims,
**characterized in that** a matching score is determined during the analysis, wherein the product is considered to be detected only if the matching score exceeds a predefined threshold.

6. The method according to claim 5, **characterized in that** an alternative product is suggested to the user, in particular according to a best matching algorithm, if the matching score falls below the predefined threshold.

7. The method according to one of the preceding claims, **characterized in that** the database is linked to a personal profile of the user, in particular his shopping cart.

8. The method according to any one of the preceding claims,
**characterized in that** the product information is arranged to identify the product.

9. The method according to any one of the preceding claims,
**characterized in that** the image is provided by means of a selfie, in particular via the app, taken by the user by means of his terminal device, in particular his smartphone.

10. The method according to any one of the preceding claims,
**characterized in that** the image shows, at least in sections, a plurality of products associated with the user, in particular worn by the user.

11. The method according to any one of the preceding claims,
**characterized by** entering a user ID into a second data field of the broadcast signal.

12. The method according to any one of the preceding claims,
**characterized in that** the broadcast signal comprises a third data field comprising an app ID.

13. The method according to any one of the preceding claims,
**characterized in that** the lifetime of a particular broadcast signal is limited.

14. The method according to any one of the preceding claims,
**characterized in that** a first broadcast signal is overwritten by a second broadcast signal when providing a new image.

15. A user terminal, in particular a smartphone, configured to perform the steps of the method according to any one of claims 1 to 14.
